# EUROPÄISCHE PATENTSCHRIFT

(11) **EP 2 704 273 B1**
(45) Veröffentlichungstag und Bekanntmachung des Hinweises auf die Patenterteilung: **02.03.2016**
(21) Anmeldenummer: 12182207.6
(22) Anmeldetag: 29.08.2012
(51) Int. Cl.: H02B 1/044, H01H 3/02

(54) **Befehls- und Meldegerät zur montage in eine Montagebohrung einer Montageplatte**
Control and signaling device to be mounted in the mounting bore of a mounting plate
Dispositif de commande et de signalisation destiné à être monté dans l'orifice de montage d'une plaque de montage

(43) Veröffentlichungstag der Anmeldung: 05.03.2014
(73) Patentinhaber: Siemens Aktiengesellschaft, 80333 München (DE)
(72) Erfinder: Faurie, Jean Jacques, 90459 Nürnberg (DE); Graf, Hans-Jürgen, 92256 Hahnbach (DE)

(56) Entgegenhaltungen:
- EP-A1- 0 460 729
- EP-B1- 0 683 931
- DE-A1- 10 330 853
- GB-A- 1 407 360

## Beschreibung

Die Erfindung betrifft ein Befehls- und Meldegerät mit einem Bedienelement, das einen zylindrischen Grundkörper aufweist, und einer Haltevorrichtung zur Befestigung des Bedienelements.

Eine derartige Befehls- und Meldevorrichtung kommt bei Maschinen oder elektrischen Anlagen zum Einsatz, die über Befehlsgeräte wie zum Beispiel Drucktaster, Wahlschalter usw., die auf die Steuerung einwirken, bedient werden. Diese Befehlsgeräte werden in Schalttafeln, Bedientableaus, Schaltschranktüren oder Gehäusedeckel montiert. Befehlsgeräte sind in der Regel modular aufgebaut. Das bedeutet, sie bestehen aus einem Betätiger, einem Befestigungsteil wie zum Beispiel einer Ringmutter oder einem speziellen Montagehalter und einem oder mehreren Schaltelementen, die als Öffner- oder Schließer-Schaltglieder ausgeführt sind. Zur Montage wird der Betätiger in der Regel von vorn durch eine Öffnung in der Schalttafel geführt und von hinten mittels eines Befestigungsteils montiert. Schaltelemente werden mit Schrauben, Schnapphaken oder riegelmechanisch am Betätiger oder am Befestigungsteil fixiert. Die elektrische Verbindung der Schaltelemente mit der Steuerung erfolgt über Anschlussklemmen.

Bei Sicherheitsanwendungen wie zum Beispiel Not-Halt-Befehlsgeräten ist es Vorschrift, dass das Signal durch das Öffnen von zwangsöffnenden Kontakten erzeugt wird. Das heißt, dass bei einem unbetätigten Not-Halt-Befehlsgerät die Kontakte und damit der zugehörige Stromkreis geschlossen sind. Im Störungs- oder Notfall wird durch Schlagen auf den Not-Halt-Betätiger, der sich vor der Schalttafel befindet, der Öffnerkontakt unterbrochen und die Anlage oder Maschine in einen sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Halt-Befehlsgerät nicht mehr funktionsfähig, das heißt, bei einer Betätigung im Notfall werden die Kontakte nicht geöffnet und damit erfolgt auch keine Beseitigung des Gefahrenzustands. Dies kann zu fatalen Schäden für Mensch und Maschine führen. Daher kommt der sicheren Verbindung zwischen Betätiger und Schaltelement eine wesentliche Bedeutung zu.

Ein weiteres entscheidendes Erfolgskriterium für ein Befehls- und Meldegerät ist neben Handling, Optik, Festsitz, Zuverlässigkeit und Qualität auch die Montagefreundlichkeit des Produkts. Die Montagefreundlichkeit wird im Wesentlichen durch das Befestigungssystem geprägt. Der modulare Aufbau eines kompletten Befehls- und Meldegeräts besteht aus den drei Komponenten: Bedien- und/oder Anzeigeelement, Befestigungselement und Funktionselement (Schaltelement, Beleuchtung, Kommunikation, etc.). Für die unterschiedlichen Einsatzgebiete des Produkts werden die Befehls- und Meldegeräte in unterschiedlichen Baureihen angeboten. Es gibt die Bedien- und/oder Anzeigeelemente und Befestigungselemente sowohl aus Kunststoff, als auch aus Metall gefertigt. Denkbar ist auch das Bedien- und/oder Anzeigeelement aus Metall und das Befestigungselement aus Kunststoff zu fertigen.

Neben dem modularen Aufbau einer Befehls- und Meldestelle gibt es auch eine günstigere kompakte Bauform. Hier besteht das Befehls- und Meldegerät aus zwei Komponenten: Dem Bedien- und/oder Anzeigeelement mit integriertem Funktionsmodul (Schaltkontakt, Beleuchtung, etc.) und dem Befestigungselement.

Aus dem Stand der Technik sind mehrere Befestigungskonzepte bekannt, dazu gehört beispielsweise die Befestigung des Befehlsgeräts über Ringmuttern und Schaltelemente mit Elementeträgern. Die dazu gehörigen Arbeitsschritte bestehen in der Positionierung der Befehlsgeräte, in der Wandöffnung, Befestigung des Befehlsgeräts in der Wandöffnung mit Hilfe einer Ringmutter, Aufrasten des Elementträgers sowie Aufrasten des Schaltelements.

Außerdem ist die Befestigung des Befehlsgeräts mit Halter und Schaltelement mit mehr als zwei Bauteilen mit Elementträger bekannt. Dieses Konzept benötigt die Arbeitsschritte: Positionierung des Befehlsgeräts in der Wandöffnung, Befestigung des Befehlsgeräts in der Wandöffnung mit Hilfe eines Halters, optionales Aufrasten des Elementeträgers - diese wird nur bei Montagen von mehr als zwei Elementen benötigt - sowie Aufrasten des Schaltelements.

Schließlich ist die Befestigung des Befehlsgeräts mit einer integrierten Halterlösung bekannt. Zu diesem Konzept gehören die Arbeitsschritte: Positionierung der Befehlsgeräte in der Wandöffnung, Befestigung des Befehlsgeräts in der Wandöffnung mit Hilfe eines integrierten Halters sowie Aufrasten des Schaltelements. Diese Art von Halter beinhaltet eine Vorfixierung des Befehlsgeräts und einen Träger von mindestens drei Schaltelementen. Durch die Integration der Vorfixierung kann das Befehlsgerät nach dem Aufrasten des Halters auf das Befehlsgerät nicht mehr aus der Wandöffnung entweichen, womit insgesamt eine vereinfachte Montage verbunden ist. Außerdem entfällt die separate Montage des Elementeträgers.

Aus der DE 37 09 970 C2 geht dazu ein Gehäuse hervor, das in die Öffnung einer Schalttafel eingeschoben wird. Zur Befestigung des Gehäuses in der Aufnahmewand sind von zwei gegenüber liegenden Seitenwänden im Kantenbereich Nuten vorgesehen, die mit ihren Enden an die benachbarten Gehäuseseiten münden. In diesen Nuten ist ein als Federbandstreifen ausgebildetes Befestigungselement hochkant eingesetzt. Die Tiefe der Nuten ist im Wesentlichen gleich der Breite des Federbandstreifens und die Breite der Nut ist nur unwesentlich größer als die Stärke des Federbandmaterials. Die Nuten liegen im Wesentlichen im Bereich der Verstärkungsstäbe, so dass ausreichend Material für ihre Aufnahme vorhanden ist. Der Federbandstreifen liegt mit einem mittleren Längsabschnitt hochkant in der Nut. Während seine beiden äußeren Längsabschnitte aus dem benachbarten Seitenrand heraustreten, wobei die Längsabschnitte, die die an der Aufnahmewand anliegenden Federelemente bilden, derart bogenförmig verlaufen, dass sie sich mehr oder weniger der Gehäusewand nähern.

Die DE 100 34 253 C1 beschreibt ein an einer Bedientafel befestigtes Befehlsgerät, bei dem ein Zwischenelement frontseitig mit einem äußeren Auflageelement an einer Bedientafel anliegt und in einem inneren Auflageelement in einer Ausnehmung in der Bedientafel hinein- beziehungsweise durch die Ausnehmung hindurchragt. Ein Signalgeber liegt frontseitig mit einem Auflagebereich an einem inneren Auflageelement an und reicht in einen Durchtrittsbereich durch das Zwischenelement und die Bedientafel hindurch. Ein Geberhalter ist rückseitig an die Bedientafel ansetzbar und mit dem Durchtrittsbereich verspannbar.

Aus der EP 0 683 931 B1 geht ein Befehls- und/oder Meldegerät mit einer Rosette hervor, die einen zylindrischen Teil aufweist und einen Halter. Dabei ist der zylindrische Teil mit einer Längsnut versehen, von der ausgehend sich an seinem Umfang eine Quernut ersteckt, wobei der Halter eine an den Umfang des zylindrischen Teils angepasste Öffnung aufweist, wobei der Halter eine von außen drehbare Welle mit Verzahnung umfasst und einen entsprechenden gezahnten mit der Welle in Eingriff stehenden Haltering, und wobei der Halter ein Gehäuseunterteil umfasst mit einer ersten Andruckfläche, die bei Befestigung des Geräts zum Andruck an eine Montageplatte dient. Die beidseitigen schmalen Randflächen des Halterings sind jeweils mit einem ersten Steigungssegment versehen. Das Gehäuseunterteil weist an seiner durch die Öffnung gebildeten Innenwand ein zweites Steigungssegment auf. Der Halter weist ein Gehäuseoberteil mit einer zweiten Andruckfläche auf, und das Gehäuseoberteil ist an seiner durch die Öffnung gebildeten Innenwand mit mindestens einem vierten Steigungssegment versehen. Im zusammengesetzten Zustand des Halters gleitet der Haltering bei Drehung mit seinen ersten Steigungssegmenten unter axialer Verschiebung auf den zweiten und vierten Steigungssegment des Gehäuseunterteils und des Gehäuseoberteils entlang. Der Haltering weist ferner an seiner durch die Öffnung gebildeten Innenwand einen Vorsprung auf, der nach Aufstecken des Halters auf den zylindrischen Teil über die Längsnut durch Verdrehen des Halterings in die Quernut so weit unter axialer Verschiebung in Bezug auf das Gehäuseunterteil eindrehbar ist, bis die erste beziehungsweise zweite Andruckfläche durch Kraftwirkung des Vorsprungs auf eine Begrenzungskante der Quernut an die Montageplatte gepresst ist.

Aus der EP 0 460 729 A1 geht ein Befehls- und Meldegerät mit einem Bedienelement hervor, das einen zylindrischen Grundkörper aufweist und eine Haltevorrichtung zur Befestigung des Bedienelements, wobei innerhalb der Haltevorrichtung ein Bajonettverschluss mit einer Mehrzahl an unterschiedlichen Stellungen angeordnet ist, der zur Befestigung des Bedienelements in der Haltevorrichtung ausgebildet ist.

Der Nachteil der aus dem Stand der Technik bekannten Befehls- und Meldegeräte besteht darin, dass diese Geräte auf Grund der Vielzahl kleiner Einzelteile nicht montagefreundlich ausgeführt sind und somit zu einem komplizierten Zusammenbau führen.

Demgemäß besteht die Aufgabe der vorliegenden Erfindung darin, ein Befehls- und Meldegerät zu schaffen, das einen unkomplizierten Zusammenbau ermöglicht.

Diese Aufgabe wird durch ein Befehls- und Meldegerät mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Befehls- und Meldegerät mit den Merkmalen des Patentanspruchs 1 gelöst mit einem Bedienelement, das einen zylindrischen Grundkörper aufweist, und einer Haltevorrichtung zur Befestigung des Bedienelements. Die Erfindung zeichnet sich dabei dadurch aus, dass innerhalb der Haltevorrichtung ein Bajonettverschluss mit einer Mehrzahl an unterschiedlichen Stellungen angeordnet ist, der zur Befestigung des Bedienelements in der Haltevorrichtung ausgebildet ist.

Das erfindungsgemäße Fixierungssystem beinhaltet eine Vorfixierung des Befehls- und Meldegeräts in Form eines Bajonettverschlusses. Die Befestigung erfolgt über ein Getriebesystem, das eine gleichmäßige Kraftverteilung ermöglicht. Durch einen integrierten Träger am Fixierungssystem kann die separate Montage eines Elementeträgers entfallen. Dies ist auch mit vormontierten Schaltelementen möglich. Bei der Vorfixierung kann das erfindungsgemäße Fixierungssystem auf die vorhandene Fronttafeldicke zwischen 1mm und 6mm eingestellt werden. Diese Einstellung wird durch ein dreistufiges Markierungssystem erleichtert.

Zur Demontage müssen die Schaltelemente nicht entfernt werden. Hierzu genügen ein Entspannen des Fixierungssystems und ein Öffnen des Bajonettverschlusses.

Der Verdrehschutz wird beim erfindungsgemäßen Fixierungssystem über eine umlaufende scharfe Kante am Federblech und einen Fixierungsstift, der unter der Spannschraube positioniert ist, umgesetzt. Erfindungsgemäß ist vorgesehen, dass durch Drehung der Spannschraube der Fixierstift und das Federblech sich in Richtung Schalttafel bewegen, bis keine Drehung der Spannschraube mehr möglich ist.

Das erfindungsgemäße Fixierungssystem beinhaltet ein Getriebesystem mit integriertem Gewinde am Zahnrad. Ein Ritzel mit eingepresster Kopfschraube wird durch die Schraubbewegung in Richtung Fronttafel gedrückt und dreht gleichzeitig das Zahnrad. Das Zahnrad bewegt sich wegen des integrierten Gewindes ebenfalls in Richtung Fronttafel und rückt damit das Federblech samt Fixierungsstift gegen die Fronttafel.

Erfindungsgemäß ist weiterhin vorgesehen, dass am Bajonettverschluss ein Betätigungshebel angeordnet ist, der in der

Stellung "nicht verrastet", in welcher das Bedienelement nicht mit der Haltevorrichtung verrastet ist, ein Schraubelement, das zur Fixierung des Befehls- und Meldegeräts an einer Fronttafel ausgebildet ist, zumindest teilweise verdeckt.

Es kann weiterhin erfindungsgemäß vorgesehen sein, dass am Bajonettverschluss ein Betätigungshebel angeordnet ist, der in der Stellung "teilweise verrastet", in welcher das Bedienelement nur teilweise mit der Haltevorrichtung verrastet ist, ein Schraubelement, das zur Fixierung des Befehls- und Meldegeräts an einer Fronttafel ausgebildet ist, zumindest teilweise verdeckt.

Schließlich kann erfindungsgemäß vorgesehen sein, dass am Bajonettverschluss ein Betätigungshebel angeordnet ist, der in der Stellung "verrastet", in welcher das Bedienelement mit der Haltevorrichtung verrastet ist, ein Schraubelement, das zur Fixierung des Befehls- und Meldegeräts an einer Fronttafel ausgebildet ist, freigibt. Durch die Position des Bajonettverschlusses wird angezeigt, ob das Befehls- und Meldegerät am Fixierungssystem vollständig verrastet ist. Bei vollständiger Verrastung des Bajonettverschlusses am Befehls- und Meldegerät kann der Bediener das Fixierungssystem an der Fronttafel fixieren. Somit besteht nicht mehr die Gefahr, dass sich das Fixierungssystem nach einiger Zeit vom Befehls- und Meldegerät löst. Erfindungsgemäß ist weiterhin vorgesehen, dass das Schraubelement ein Ritzel antreibt, welches mit einem Zahnrad, das in der Haltevorrichtung angeordnet ist, in Wirkverbindung steht.

Das erfindungsgemäße Befehls- und Meldegerät kann weiterhin vorsehen, dass durch Drehung des Schraubelements ein Fixierstift und ein Federblech zu einer Schalttafel hin und von einer Schalttafel weg bewegbar sind. Am Federblech sind erfindungsgemäß Vorsprünge angeordnet, die derart ausgebildet sind, dass sie nach der Endmontage an der Schalttafel einen Verdrehschutz ausbilden.

In einer weiteren Ausführungsform des erfindungsgemäßen Befehls- und Meldegeräts kann vorgesehen sein, dass am Schraubelement eine Mehrzahl unterschiedlicher Positionshilfen angeordnet sind, die dazu ausgebildet sind, unterschiedliche Schalttafeldicken und die damit verbundenen Schraubstellungen anzuzeigen.

Des Weiteren ist erfindungsgemäß vorgesehen, dass die Kombination aus Bedienelement und Haltevorrichtung derart ausgebildet ist, dass ein Funktionsmodul direkt an der Kombination aus Bedienelement und Haltevorrichtung fixierbar ist.

In einem weiteren Ausführungsbeispiel kann erfindungsgemäß vorgesehen sein, dass zwischen der Kombination aus Bedienelement und Haltevorrichtung und einem Funktionsmodul ein Trägerelement angeordnet ist, das zur Fixierung des Funktionsmoduls am Trägerelement und so an der Kombination aus Bedienelement und Haltevorrichtung ausgebildet ist.

In einer besonderen Ausführungsform kann vorgesehen sein, dass im Bedienelement ein Funktionsmodul integriert ist.

Das erfindungsgemäße Befehls- und Meldegerät weist ein Bedienelement mit einem Betätiger und einem zylindrischen Grundkörper und eine Haltevorrichtung auf. Die Haltevorrichtung umfasst im Wesentlichen einen Bajonettverschluss, der einen Ring und einen Betätigungshebel aufweist. Der Ring des Bajonettverschlusses weist einen Innenring mit einer unregelmäßig ausgebildeten Innenkontur auf, die im Wesentlichen durch Ausnehmungen und Vorsprünge ausgebildet ist. Der Bajonettverschluss wird durch eine Rückstellfeder in seine Ausgangsposition rückgeführt. Die Haltevorrichtung umfasst außerdem ein Schraubelement, das ein Ritzel antreibt, welches mit einem Zahnrad in Wirkverbindung steht. Durch Drehung des Schraubelements werden das Zahnrad und das Ritzel inklusive eines darauf montierten Federblechs in Richtung einer Fronttafel bewegt.

Das erfindungsgemäße Befehls- und Meldegerät zeichnet sich durch seine einfache Handhabbarkeit bei der Montage beziehungsweise bei der Demontage aus, die jeweils mit einer Hand durchgeführt werden kann und so eine schnelle Fixierung des Befehls- und Meldegeräts ermöglicht. Das verwendete Federblech bietet einen komfortablen Verdrehschutz und gleicht Unebenheiten der Fronttafel und kleine Setzvorgänge aus. Über die Position des Bajonettverschlusses wird dem Bediener angezeigt, ob das Befehls- und Meldegerät am Fixierungssystem vollständig verrastet ist. Nur bei vollständiger Verrastung des Bajonettverschlusses am Befehls- und Meldegerät kann der Bediener das Fixierungssystem an der Fronttafel fixieren. Dadurch ist eine nicht montagegerechte Handhabung des erfindungsgemäßen Befehls- und Meldegeräts ausgeschlossen. Das hier vorgestellte erfindungsgemäße Befehls- und Meldegerät eignet sich sowohl für eine Fertigung aus Kunststoff als auch aus Metall.

Weiter Vorteile und Ausführungen der Erfindung werden nachfolgend anhand von Ausführungsbeispielen sowie anhand der Zeichnung erläutert.

Dabei zeigen schematisch:
Fig. 1 in einer perspektivischen Darstellung eine Haltevorrichtung eines erfindungsgemäßen Befehls- und Meldegerätes;
Fig. 2 in einer perspektivischen Darstellung die Haltevorrichtung nach Fig. 1 mit umgebendem Gehäuse;
Fig. 3 in perspektivischen Darstellung die Haltevorrichtung mit Federblech und Fixierstift;
Fig. 4 in einer Draufsicht die Anordnung aus Schraubelement und Betätigungshebel des Bajonettverschlusses in nicht verrasteter Stellung des Bedienelements in der Haltevorrichtung;
Fig. 5 in einer Draufsicht die Anordnung aus Schraubelement und Betätigungshebel des Bajonettverschlusses in teilweise verrasteter Stellung des Bedienelements in der Haltevorrichtung;
Fig. 6 in einer Draufsicht die Anordnung aus Schraubelement und Betätigungshebel des Bajonettverschlusses in verrasteter Stellung des Bedienelements in der Haltevorrichtung;
Fig. 7 in einer Draufsicht das Schraubelement mit Positionshilfen, die unterschiedliche Fronttafeldicken kennzeichnen;
Fig. 8 in einer perspektivischen Darstellung das erfindungsgemäße Befehls- und Meldegerät im montierten Zustand.

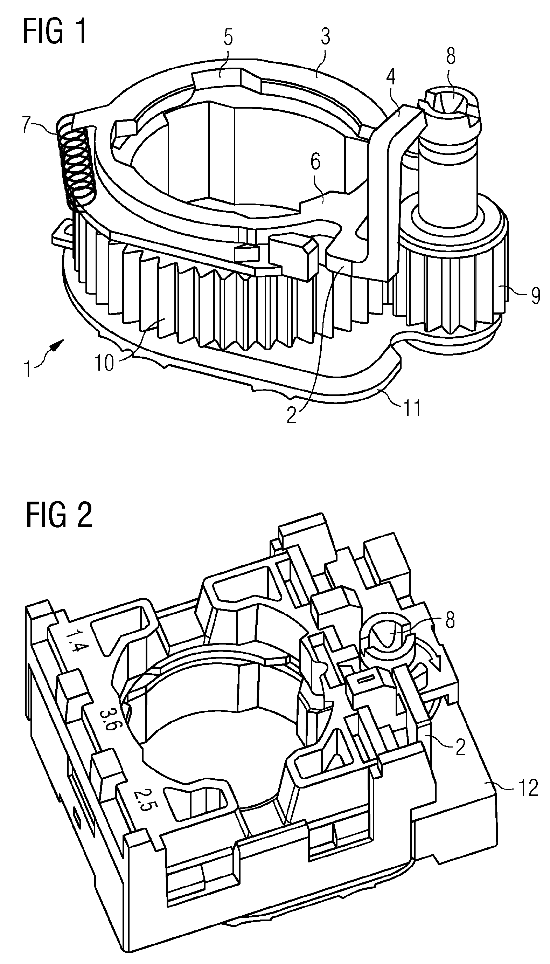

Fig. 1 zeigt ein Ausführungsbeispiel eines erfindungsgemäßen Befehls- und Meldegeräts, das ein Bedienelement mit einem Betätiger und einem zylindrischen Grundkörper und eine Haltevorrichtung 1 umfasst. Die Haltevorrichtung 1 umfasst im Wesentlichen einen Bajonettverschluss 2, der einen Ring 3 und einen Betätigungshebel 4 aufweist. Der Ring 3 des Bajonettverschlusses 2 weist einen Innenring mit einer unregelmäßig ausgebildeten Innenkontur auf, die im Wesentlichen durch Ausnehmungen 5 und Vorsprüngen 6 ausgebildet ist. Der Bajonettverschluss 2 wird durch eine Rückstellfeder 7 in seine Ausgangsposition rückgeführt. Die Haltevorrichtung 1 umfasst außerdem ein Schraubelement 8, das ein Ritzel 9 antreibt, welches mit einem Zahnrad 10 in Wirkverbindung steht. Durch die Drehung des Schraubelements 8 wird das Zahnrad 10 und das Ritzel 9 inklusive eines darauf montierten Federblechs 11 in Richtung einer Schalttafel bewegt.

In Fig. 2 ist die Haltevorrichtung 1 mit umgebendem Gehäuse 12 dargestellt. Aus dieser Darstellung geht die räumliche Nähe zwischen Schraubelement 8 und Betätigungshebel 4 des Bajonettverschlusses 2 hervor.

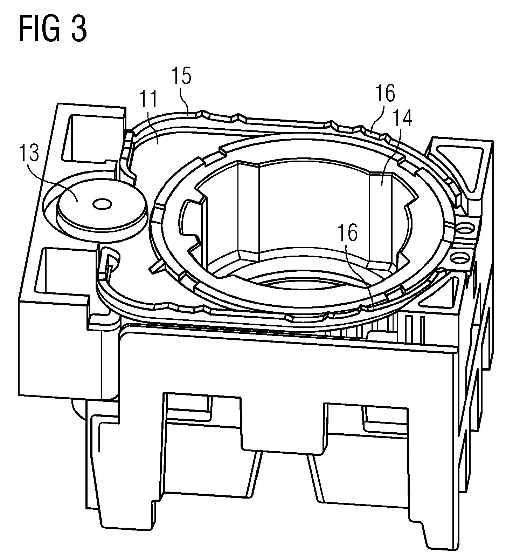

Fig. 3 zeigt die Haltevorrichtung 1 von der Seite, die der Schalttafel bei der Montage zugewandt ist. Gegenüberliegend zum Schraubelement 8 ist auf der parallel dazu angeordneten Seite ein Fixierstift 13 positioniert, der sich zusammen mit dem Federblech 11 bei der Montage in Richtung Schalttafel bewegt. Das Federblech 11 umgibt die konzentrische Ausnehmung 14 in der Haltevorrichtung 1, in welcher der zylindrische Grundkörper des Bedienelements eingeführt wird. Das Federblech 11 weist eine umlaufende Kante 15 auf, die vorzugsweise zackenartige Vorsprünge 16 aufweist, die als Verdrehschutz dienen.

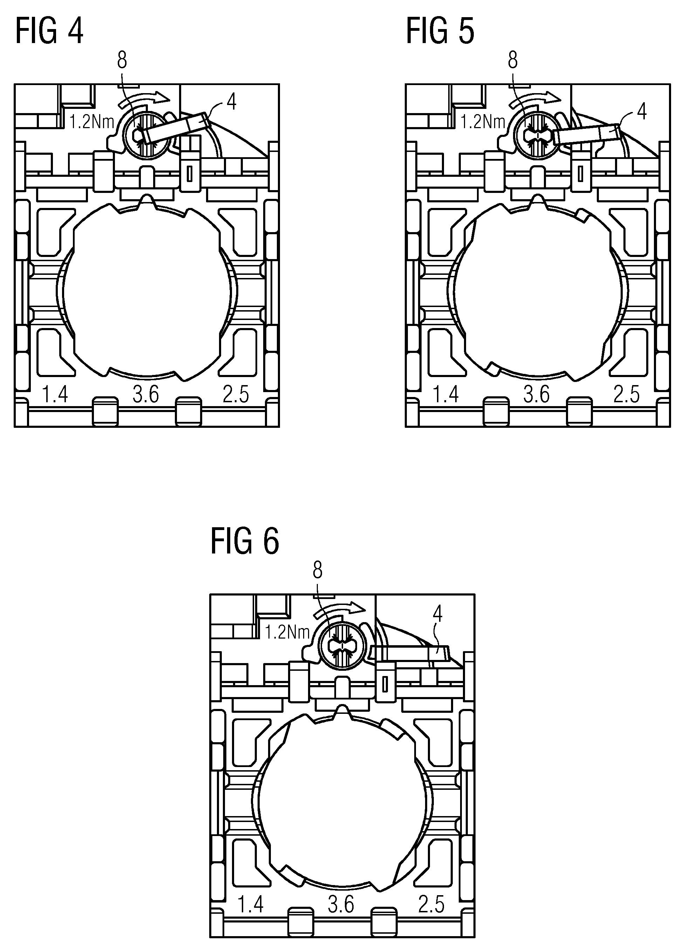

In Fig. 4 ist die Anordnung aus Schraubelement 8 und Betätigungshebel 4 des Bajonettverschlusses 2 in nicht verrasteter Stellung des Bedienelements in der Haltevorrichtung 1 dargestellt. Aus dieser Darstellung geht hervor, dass es bei einer vollständigen Nichtverrastung des Bedienelements in der Haltevorrichtung 1 nicht möglich ist, das Schraubelement 8 zu betätigen, um den Fixierstift 13 und das Federblech 11 in Richtung Schalttafel zu bewegen.

In Fig. 5 ist die Anordnung aus Schraubelement 8 und Betätigungshebel 4 des Bajonettverschlusses 2 in teilweiser verrasteter Stellung des Bedienelements in der Haltevorrichtung 1 dargestellt. Auch bei der teilweise verrasteten Stellung ist es nicht möglich, das Schraubelement 8 so zu bewegen, dass sich der Fixierstift 13 und das Federblech 11 zur Schalttafel hin bewegen.

Fig. 6 zeigt die Anordndung aus Schraubelement 8 und Betätigungshebel 4 des Bajonettverschlusses 2 in verrasteter Stellung des Bedienelements in der Haltevorrichtung 1. Bei einer komplett vorschriftsmäßigen Verrastung des Bedienelements in der Haltevorrichtung 1 ist es möglich, das Schraubelement 8 durch einen Schraubendreher zu bedienen und dadurch den Fixierstift 13 beziehungsweise das Federblech 11 in Richtung der Schalttafel zu verschieben.

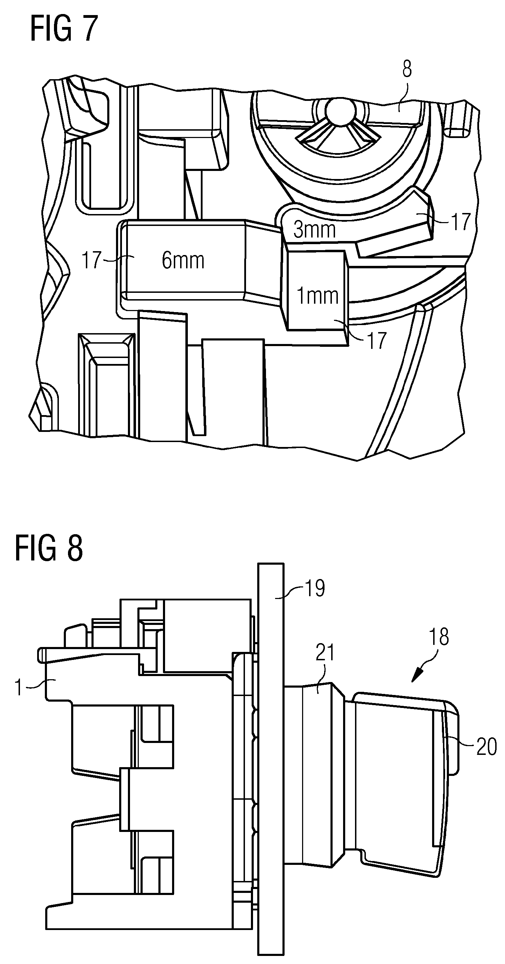

Fig. 7 zeigt das Schraubelement 8 mit umgebenden Positionshilfen 17, die unterschiedliche Schalttafeldicken kennzeichnen. Erfindungsgemäß ist vorgesehen, dass der Kopf des Schraubelements 8 bei den jeweiligen Schalttafeldicken bündig mit den jeweilig dazu gehörenden Positionshilfen abschließt. Diese Positionshilfen 17 stellen für den Bediener somit eine Vereinfachung bei der Endfixierung des Befehls- und Meldegeräts dar.

Fig. 8 zeigt das erfindungsgemäße Befehls- und Meldegerät im montierten Zustand. Zur Montage wird das Bedienelement 18 in der Regel von vorn durch eine Öffnung in der Schalttafel 19 geführt und von hinten mittels der Haltevorrichtung 1 montiert. Schaltelemente werden mit Schrauben, Schnapphaken oder riegelmechanisch am Bedienelement 18 oder an der Haltevorrichtung 1 fixiert. Die elektrische Verbindung der Schaltelemente mit der Steuerung erfolgt über Anschlussklemmen. Das Bedienelement 18 weist einen Betätiger 20 und einen zylindrischen Grundkörper 21 auf, der in die konzentrische Ausnehmung 14 in der Haltevorrichtung 1 eingeführt wird.

Das erfindungsgemäße Befehls- und Meldegerät zeichnet sich durch seine einfache Handhabbarkeit bei der Montage beziehungsweise bei der Demontage aus, die jeweils mit einer Hand durchgeführt werden kann und so eine schnelle Fixierung des Befehls- und Meldegeräts ermöglicht. Das verwendete Federblech bietet einen komfortablen Verdrehschutz und gleicht Unebenheiten der Fronttafel und kleine Setzvorgänge aus. Über die Position des Bajonettverschlusses wird dem Bediener angezeigt, ob das Befehls- und Meldegerät am Fixierungssystem vollständig verrastet ist. Nur bei vollständiger Verrastung des Bajonettverschlusses am Befehls- und Meldegerät kann der Bediener das Fixierungssystem an der Fronttafel fixieren. Dadurch ist eine nicht montagegerechte Handhabung des erfindungsgemäßen Befehls- und Meldegeräts ausgeschlossen. Das hier vorgestellte erfindungsgemäße Befehls- und Meldegerät eignet sich sowohl für eine Fertigung aus Kunststoff als auch aus Metall.

## Patentansprüche

1. Befehls- und Meldegerät mit einem Bedienelement (18), das einen zylindrischen Grundkörper (21) aufweist, und einer Haltevorrichtung (1) zur Befestigung des Bedienelements (18), wobei innerhalb der Haltevorrichtung (1) ein Bajonettverschluss (2) mit einer Mehrzahl an unterschiedlichen Stellungen angeordnet ist, der zur Befestigung des Bedienelements (18) in der Haltevorrichtung (1) ausgebildet ist,
**dadurch gekennzeichnet, dass** am Bajonettverschluss (2) ein Betätigungshebel (4) angeordnet ist, der in der Stellung "nicht verrastet", in welcher das Bedienelement (18) nicht mit der Haltevorrichtung (1) verrastet ist, ein Schraubelement (8), das zur Fixierung des Befehls- und Meldegeräts an einer Schalttafel (19) ausgebildet ist, zumindest teilweise verdeckt.

2. Befehls- und Meldegerät nach Anspruch 1,
**dadurch gekennzeichnet, dass** am Bajonettverschluss (2) ein Betätigungshebel (4) angeordnet ist, der in der Stellung "teilweise verrastet", in welcher das Bedienelement (18) nur teilweise mit der Haltevorrichtung (1) verrastet ist, ein Schraubelement (8), das zur Fixierung des Befehls- und Meldegeräts an einer Schalttafel (19) ausgebildet ist, zumindest teilweise verdeckt.

3. Befehls- und Meldegerät nach Anspruch 1,
**dadurch gekennzeichnet, dass** am Bajonettverschluss (2) ein Betätigungshebel (4) angeordnet ist, der in der Stellung "verrastet", in welcher das Bedienelement (18) mit der Haltevorrichtung (1) verrastet ist, ein Schraubelement (8), das zur Fixierung des Befehls- und Meldegeräts an einer Schalttafel (19) ausgebildet ist, freigibt.

4. Befehls- und Meldegerät nach einem der Ansprüche 2 oder 3,
**dadurch gekennzeichnet, dass** das Schraubelement (8) ein Ritzel (9) antreibt, welches mit einem Zahnrad (10), das in der Haltevorrichtung (1) angeordnet ist, in Wirkverbindung steht.

5. Befehls- und Meldegerät nach Anspruch 4,
**dadurch gekennzeichnet, dass** durch Drehung des Schraubelements (8) sich ein Fixierstift (13) und ein Federblech (11) zu einer Schalttafel (19) hin oder von einer Schalttafel (19) weg bewegbar sind.

6. Befehls- und Meldegeräte nach Anspruch 5,
**dadurch gekennzeichnet, dass** am Federblech (11) Vorsprünge (16) angeordnet sind, die derart ausgebildet sind, dass sie nach der Endmontage an der Schalttafel (19) einen Verdrehschutz ausbilden.

7. Befehls- und Meldegerät nach einem der Ansprüche 2 bis 6,
**dadurch gekennzeichnet, dass** am Schraubelement (8) eine Mehrzahl unterschiedlicher Positionshilfen (17) angeordnet sind, die dazu ausgebildet sind, unterschiedliche Schalttafeldicken und die damit verbundenen Schraubstellungen anzuzeigen.

8. Befehls- und Meldegeräte nach einem der Ansprüche 1 bis 7,
**dadurch gekennzeichnet, dass** die Kombination aus Bedienelement (18) und Haltevorrichtung (1) derart ausgebildet ist, dass ein Funktionsmodul direkt an der Kombination aus Bedienelement (18) und Haltevorrichtung (1) fixierbar ist.

9. Befehls- und Meldegerät nach einem der Ansprüche 1 bis 7,
**dadurch gekennzeichnet, dass** zwischen der Kombination aus Bedienelement (18) und Haltevorrichtung (1) und einem Funktionsmodul ein Trägerelement angeordnet ist, das zur Fixierung des Funktionsmoduls am Trägerelement und so an der Kombination aus Bedienelement (18) und Haltevorrichtung (1) ausgebildet ist.

10. Befehls- und Meldegerät nach einem der Ansprüche 1 bis 7,
**dadurch gekennzeichnet, dass** im Bedienelement (18) ein Funktionsmodul integriert ist.

11. Befehls- und Meldegerät nach einem der Ansprüche 1 bis 10, **dadurch gekennzeichnet, dass** das Befehls- und Meldegerät aus Kunststoff gefertigt ist.

12. Befehls- und Meldegerät nach einem der Ansprüche 1 bis 10, **dadurch gekennzeichnet, dass** das Befehls- und Meldegerät aus Metall gefertigt ist.

## Claims

1. Control and signalling device with an operating element (18), which has a cylindrical main body (21), and a holding device (1), for fastening the operating element (18), wherein a bayonet closure (2) that has a plurality of different positions and is designed for fastening the operating element (18) in the holding device (1) is arranged within the holding device (1),
**characterized in that** on the bayonet closure (2) there is arranged an actuating lever (4), which in the "non-locked" position, in which the operating element (18) is not locked with the holding device (1), at least partially conceals a screwing element (8), which is designed for fixing the control and signalling device on a circuit board (19).

2. Control and signalling device according to Claim 1,
**characterized in that** on the bayonet closure (2) there is arranged an actuating lever (4), which in the "partially locked" position, in which the operating element (18) is only partially locked with the holding device (1), at least partially conceals a screwing element (8), which is designed for fixing the control and signalling device on a circuit board (19).

3. Control and signalling device according to Claim 1,
**characterized in that** on the bayonet closure (2) there is arranged an actuating lever (4), which in the "locked" position, in which the operating element (18) is locked with the holding device (1), exposes a screwing element (8), which is designed for fixing the control and signalling device on a circuit board (19).

4. Control and signalling device according to either of Claims 2 and 3,
**characterized in that** the screwing element (8) drives a pinion (9), which is in operative connection with a gear wheel (10), which is arranged in the holding device (1).

5. Control and signalling device according to Claim 4,
**characterized in that** a fixing pin (13) and a spring plate (11) are movable towards a circuit board (19) or away from a circuit board (19) by turning the screwing element (8).

6. Control and signalling device according to Claim 5,
**characterized in that** on the spring plate (11) there are arranged projections (16), which are designed so as to form a means of preventing turning after the final mounting on the circuit board (19).

7. Control and signalling device according to one of Claims 2 to 6,
**characterized in that** on the screwing element (8) there are arranged a plurality of different positioning aids (17), which are designed to indicate different circuit board thicknesses and the associated screwing positions.

8. Control and signalling device according to one of Claims 1 to 7,
**characterized in that** the combination comprising the operating element (18) and the holding device (1) is designed in such a way that a functional module can be fixed directly on the combination comprising the operating element (18) and the holding device (1).

9. Control and signalling device according to one of Claims 1 to 7,
**characterized in that** between the combination comprising the operating element (18) and the holding device (1) and a functional module there is arranged a carrier element, which is designed for fixing the functional module on the carrier element and so is formed on the combination comprising the operating element (18) and the holding device (1).

10. Control and signalling device according to one of Claims 1 to 7,
**characterized in that** a functional module is integrated in the operating element (18).

11. Control and signalling device according to one of Claims 1 to 10, **characterized in that** the control and signalling device is produced from plastic.

12. Control and signalling device according to one of Claims 1 to 10, **characterized in that** the control and signalling device is produced from metal.

## Revendications

1. Appareil de commande et de signalisation avec un élément de réglage (18), qui présente un corps de base cylindrique (21), et un dispositif de retenue (1) destiné à la fixation de l'élément de réglage (18), dans lequel à l'intérieur du dispositif de retenue (1) est disposée une fermeture à baïonnette (2) avec une pluralité de positions différentes, qui est configurée pour la fixation de l'élément de réglage (18) dans le dispositif de retenue (1),
**caractérisé en ce qu'**au niveau de la fermeture à baïonnette (2) est disposé un levier d'actionnement (4) qui, dans la position « non enclenché », dans laquelle l'élément de réglage (18) n'est pas enclenché avec le dispositif de retenue (1), recouvre au moins partiellement un élément de vissage (8) qui est configuré pour la fixation de l'élément de commande et de signalisation à un tableau de commande (19).

2. Appareil de commande et de signalisation selon la revendication 1,
**caractérisé en ce qu'**au niveau de la fermeture à baïonnette (2) est disposé un levier d'actionnement (4), qui, dans la position « partiellement enclenché », dans laquelle l'élément de réglage (18) n'est que partiellement enclenché avec le dispositif de retenue (1), recouvre au moins partiellement un élément de vissage (8) qui est configuré pour la fixation de l'élément de commande et de signalisation au niveau d'un tableau de commande (19).

3. Appareil de commande et de signalisation selon la revendication 1,
**caractérisé en ce qu'**au niveau de la fermeture à baïonnette (2) est disposé un levier d'actionnement (4) qui, dans la position « enclenché », dans laquelle l'élément de réglage (18) est enclenché avec le dispositif de retenue (1), libère un élément de vissage (8) qui est configuré pour la fixation de l'élément de commande et de signalisation au niveau d'un tableau de commande (19).

4. Appareil de commande et de signalisation selon l'une des revendications 2 ou 3,
**caractérisé en ce que** l'élément de vissage (8) entraîne un pignon (9), lequel est en liaison active avec une roue dentée (10) qui est disposée dans le dispositif de retenue (1).

5. Appareil de commande et de signalisation selon la revendication 4,
**caractérisé en ce que** par le biais d'une rotation de l'élément de vissage (8) une goupille de fixation (13) et une tôle élastique à ressorts (11) sont mobiles par rapport à un tableau de commande (19) vers ou depuis un tableau de commande (19).

6. Appareil de commande et de signalisation selon la revendication 5,
**caractérisé en ce que** des saillies (16) sont disposées au niveau de la tôle élastique à ressorts (11), qui sont configurées de telle sorte qu'elles forment à l'issue du montage final au niveau du tableau de commande (19) une protection contre les torsions.

7. Appareil de commande et de signalisation selon l'une des revendications 2 à 6,
**caractérisé en ce qu'**au niveau de l'élément de vissage (8) sont disposées une pluralité d'éléments d'aide au positionnement (17) différents, qui sont configurés pour afficher différentes épaisseurs de tableau de commande et les positions de vissage qui y sont associées.

8. Appareil de commande et de signalisation selon l'une des revendications 1 à 7,
**caractérisé en ce que** la combinaison de l'élément de réglage (18) et du dispositif de retenue (1) est configurée de telle sorte qu'un module fonctionnel peut être fixé directement au niveau de la combinaison de l'élément de réglage (18) et du dispositif de retenue (1).

9. Appareil de commande et de signalisation selon l'une des revendications 1 à 7,
**caractérisé en ce que**, entre la combinaison de l'élément de réglage (18) et du dispositif de retenue (1) et un module fonctionnel est disposé un élément de support qui est configuré pour la fixation du module fonctionnel au niveau de l'élément de support et ainsi au niveau de la combinaison de l'élément de réglage (18) et du dispositif de retenue (1).

10. Appareil de commande et de signalisation selon l'une des revendications 1 à 7, **caractérisé en ce que**, dans l'élément de réglage (18) est intégré un module fonctionnel.

11. Appareil de commande et de signalisation selon l'une des revendications 1 à 10, **caractérisé en ce que** l'appareil de commande et de signalisation est fabriqué en matière plastique.

12. Appareil de commande et de signalisation selon l'une des revendications 1 à 10, **caractérisé en ce que** l'appareil de commande et de signalisation est fabriqué en métal.
